Europäisches Patentamt

European Patent Office

Office européen des brevets

(19)

(11) **EP 1 487 089 A2**

(12) **EUROPEAN PATENT APPLICATION**

(43) Date of publication:
**15.12.2004 Bulletin 2004/51**

(51) Int Cl.[7]: **H02K 21/12**, H02K 1/14

(21) Application number: **04253437.0**

(22) Date of filing: **10.06.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **13.06.2003 JP 2003168600
27.08.2003 JP 2003303069**

(71) Applicant: **Matsushita Electronics Corporation
Kadoma-shi, Osaka 571-8501 (JP)**

(72) Inventors:
• **Tamaki, Satoshi
Hirakata-shi, Osaka 573-1194 (JP)**

• **Nagaki, Toshikazu
Hirakata-shi, Osaka 573-0093 (JP)**
• **Kondon, Yasuhiro
Hirakata-shi, Osaka 573-0164 (JP)**
• **Nakata, Hideki
Katano-shi, Osaka 576-0021 (JP)**
• **Kadoya, Naoyuki
Sakai-shi, Osaka 590-0974 (JP)**

(74) Representative: **Rackham, Stephen Neil
GILL JENNINGS & EVERY,
Broadgate House,
7 Eldon Street
London EC2M 7LH (GB)**

(54) **Permanent magnet motor**

(57)     A motor is provided, which produces a high level of torque, displays minimal distortion of the induced voltage waveform, and is capable of being optimized in accordance with the required levels of controllability and cogging torque. The motor comprises a stator (11), in which windings (3) are wound around each of a plurality of stator teeth (2) provided on a stator core (1), and a rotor (12), in which a plurality of permanent magnets (5) that exceeds the number of stator teeth (2) are disposed at equal intervals around a periphery of a rotor core (4). In this motor, the stator teeth (2) are arranged into a plurality of stator teeth groups (I,II,III), in which the windings (3) to which the same phase voltage is applied are positioned adjacent to one another, and the windings (3) on adjacent stator teeth (2) in the group (I,II,III) are wound in opposite directions. Furthermore, an interpolar angle θs (deg) between the stator teeth (2) within each stator teeth group (I,II,III) is set to any angle that satisfies the requirement: 360/P (deg) ≤ θs (deg) ≤ 360/T (deg) where T is the total number of stator teeth (2) and P is the total number of permanent magnets (5).

Fig. 1

**Description**

The present invention relates to a motor, and more particularly to a motor that may be ideally applied to pure electric vehicles (PEV), hybrid electric vehicles (HEV) and fuel cell electric vehicles (FCEV), and also to electrical appliances and robots.

Conventionally, motors for pure electric vehicles (PEV), hybrid electric vehicles (HEV) and fuel cell electric vehicles (FCEV) have used concentrated winding, embedded magnet type motors (for example, see Japanese Patent Laid-Open Publication No. 2000-245085).

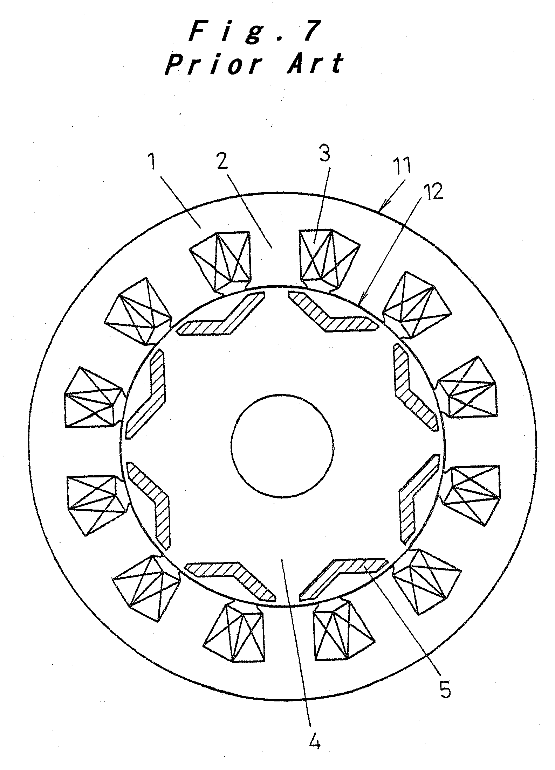

The structure of these motors is described with reference to Fig. 7. Fig. 7 is a cross-sectional view of the principal elements of the motor, through a plane orthogonal to the central rotational axis of the motor. In Fig. 7, a stator 11 comprises a plurality (12 in the example shown in the drawing) of stator teeth 2 disposed at equal intervals around the inner periphery of a stator core 1, with windings 3 wound around each of these stator teeth 2. A rotor 12 comprising a plurality (8 in the example shown in the drawing) of permanent magnets 5 embedded at equal intervals around the periphery of a rotor core 4 is provided within the stator 11 in a freely rotatable manner. The outer peripheral surface of the rotor 12 opposes the inner peripheral surfaces of the stator teeth 2 of the stator 11 with a minute gap provided therebetween. The windings 3 comprise U phase, V phase, and W phase windings, and if an electric current with a trapezoidal waveform in which the phase difference varies by an electrical angle of 120 (deg) is supplied to the windings 3 of each phase, then the torque that generates between the windings 3 of each phase and the rotor core 4 will also display a phase difference of 120 (deg). The combination of these three phases of torque forms an overall torque, which causes the rotor core 4 to rotate in a predetermined direction. In other words, the motor undergoes so-called three phase full wave driving about the central rotational axis.

In a different conventional configuration (for example, see Japanese Patent Laid-Open Publication No. 2002-199630), a plurality of stator teeth (9 for example) provided on the stator are divided into a plurality of groups (3 or a multiple of 3 for example), wherein each group comprises a plurality of adjacent stator teeth (3 for example) to which the same phase voltage is applied. In this motor, a U phase, V phase, or W phase voltage is applied to each of these groups, and opposite winding directions are used for the windings on adjacent stator teeth within each group. Further, by disposing a number of permanent magnets that is fewer than the number of stator teeth at equal intervals around the rotor, and arranging the stator teeth at unequal intervals, the positional variation between the central axis of the stator teeth and the polar center of the permanent magnets can be reduced, enabling a reduction in the phase difference of the induced voltage in the windings.

However, although concentrated winding motors such as that disclosed in Japanese Patent Laid-Open Publication No. 2000-245085 offer the advantage of providing increased torque, waveform distortion occurs in the counter electromotive voltage. If this waveform distortion of the counter electromotive voltage becomes too large, then overcurrent increase, causing increased iron loss and a decrease in efficiency. Furthermore, there is also a danger of overcurrent developing in the permanent magnets 5 embedded in the rotor 12, which can cause heating of the permanent magnets 5 and a corresponding increase in temperature, resulting in demagnetization.

Furthermore, the motor disclosed in Japanese Patent Laid-Open Publication No. 2002-199630 is an 8-pole 9-slot type motor in which the number of stator teeth is greater than the number of permanent magnets, in the same manner as for the conventional motor shown in Fig. 7. In this type of structure, the dimension in the circumferential direction of the tips of the stator teeth is smaller than the effective circumferential width of the permanent magnets, and the stator windings employ concentrated winding. Consequently distortions develop in the induced voltage waveforms, making control of the motor more difficult. Moreover, as the rotational speed increases, the peak of the distorted waveform rises higher and more rapidly, and can exceed the allowable voltage, and the resulting voltage restrictions make high-speed rotation impossible.

The present invention takes the problems described above into consideration, with an object of providing a motor which produces a high level of torque, displays minimal distortion of the induced voltage waveform, and is capable of being optimized in accordance with the required levels of controllability and cogging torque.

In order to achieve this object, a motor of the present invention comprises a stator, in which windings are wound around each of a plurality of stator teeth provided on a stator core, and a rotor, in which a plurality of permanent magnets that exceeds the number of stator teeth are disposed at equal intervals around a periphery of a rotor core, wherein the stator teeth are arranged into a plurality of stator teeth groups, in which the windings to which the same phase voltage is applied are positioned adjacent to one another, and the windings on adjacent stator teeth in the group are wound in opposite directions, and an interpolar angle $\theta s$ (deg) between the stator teeth within each stator teeth group is set to any angle that satisfies the requirement: $360/P$ (deg) $\leq \theta s$ (deg) $\leq 360/T$ (deg) where T is the total number of stator teeth and P is the total number of permanent magnets.

By employing such a configuration, a concentrated winding, permanent magnet type motor capable of generating high torque levels is constructed, and because the windings within each stator teeth group are wound so that the polarity of adjacent stator teeth differs, irregularities within the magnetic field distribution is lessened. In addition, distortions in the counter electromotive voltage induced in the windings during driving of the motor is reduced, and iron loss in the stator core and the rotor core is suppressed. Furthermore, the generation of overcurrent within the permanent magnets in the rotor core is also suppressed, meaning heat generation caused by such overcurrent is reduced and demagnetization of the permanent magnets is suppressed, thus enabling a more efficient motor. In addition, because the interpolar angle between stator teeth within each stator teeth group is set to any desired angle within a range between the positional angle of the permanent magnets, so that the phases of the stator teeth and the permanent magnets match, enabling a high level of controllability, through to the angle at which the stator teeth are distributed equally around the entire circumference of the stator core. Thus, cogging torque is minimized, a motor that displays the required controllability and cogging torque characteristics is produced.

Furthermore, when the total number of the stator teeth is termed T, the number of the stator teeth within a single stator teeth group is termed n, the number of winding sets, wherein one set is defined as the windings of the three U, V, and W phases across three stator teeth groups, is termed s, and k is a positive integer, then by ensuring values such that the total number of the stator teeth $T = 3 \times s \times n$, the total number of the rotor poles $P = 2 \times (s (\pm 1 + 3k))$, and $P > T$, the combination between the total number of stator stator teeth and the total number of rotor poles is optimized, enabling the generation of higher torque levels. Configurations in which the total number of the rotor poles P is the smallest number that exceeds the total number of the stator teeth T are ideal as they provide excellent volumetric efficiency and enable cogging torque to be minimized.

Furthermore, by setting a width dimension in a circumferential direction of a tip of the stator teeth to a value that is either substantially equal to, or larger than an effective width in the circumferential direction of the aforementioned permanent magnet, the induced voltage wave form becomes sinusoidal, enabling distortions in the induced voltage waveform to be prevented and controllability to be improved.

In addition, in those cases where the interpolar angle between stator teeth is not 360/T (deg), by stretching the feet of the adjacent stator teeth from the adjacent stator teeth groups across a gap between the teeth, thus reducing a width of an open slot between the stator teeth, permeance variation in the magnetic path of the magnetic flux from the permanent magnets is moderated, variations in the magnetic field energy is moderated, and the cogging torque is reduced. As a result, a motor in which distortions in the induced voltage waveform at high torque are reduced, and cogging torque is minimal is produced.

Furthermore, when the interpolar angle between the adjacent stator teeth within the same stator teeth group is termed θs (deg), an open slot angle between adjacent stator teeth within the same stator teeth group is termed os1 (deg), and an open slot angle between adjacent stator teeth from different stator teeth groups is termed os2 (deg), then by ensuring that the following two requirements: $θs/5 \ (deg) > os1 \ (deg) \geq θs/7 \ (deg)$, and $os2 \ (deg) \leq os1 \ (deg)$ are satisfied, permeance variation in the magnetic path of the magnetic flux from the permanent magnets is moderated even further, variations in the magnetic field energy is also better moderated, and the cogging torque is reduced even further.

Furthermore, in those cases where the interpolar angle between the stator teeth is not 360/P (deg), by altering cross-sectional areas of the windings around the adjacent stator teeth so that any differences in magnetic flux density caused by phase differences between the adjacent stator teeth of the same phase is removed and a uniform magnetic flux density is achieved between the stator teeth, this uniform magnetic flux density between the stator teeth enables the induced voltage to be stabilized at a constant level. This improves controllability. Moreover, in stator teeth where the cross-sectional area is reduced, the diameter of the winding is increased by an equivalent amount, enabling a reduction in copper loss and an improvement in efficiency.

In addition, when the rotor is constructed by layering, in an axial direction, a magnet type rotor section in which permanent magnets are disposed in the rotor core, and a reluctance type rotor section in which the rotor core is provided with magnetic saliency, then greater use is made of reluctance torque, thereby enabling an improvement in high-speed controllability even in those cases where the interpolar angle between stator teeth has been set to a value different from the positional angle between the permanent magnets (that is, a value different from 360/P (deg)) in order to achieve the desired cogging torque characteristics.

Furthermore, in those cases mentioned above where the interpolar angle between the stator teeth is not 360/P (deg), by skewing the adjacent stator teeth of the same phase to produce any angle down to 360/P (deg), the effect of phase difference between the stator teeth and the permanent magnets is reduced, thus enabling better controllability at high speeds.

Preferred embodiments of the present invention will be hereinafter described with reference to the accompanying drawings, in which:

Fig. 1 is a cross-sectional view showing a schematic configuration of a motor according to a first embodiment of the present invention;

Fig. 2 is a cross-sectional view showing a schematic configuration of a modification of the motor of the same embodiment;

Fig. 3 is a cross-sectional view showing a schematic configuration of a motor according to a second embodiment of the present invention;

Fig. 4 is an enlarged cross-sectional view of the main elements of a motor according to a third embodiment of the present invention;

Fig. 5 is an explanatory diagram showing skewing of stator teeth in a motor according to a fourth embodiment of the present invention;

Fig. 6A and Fig. 6B show a motor according to a fifth embodiment of the present invention, wherein Fig. 6A is a partial perspective view of the main elements of the motor, and Fig. 6B is a plan view showing a reluctance type rotor section; and

Fig. 7 is a cross-sectional view showing a schematic configuration of the main elements of a conventional motor.

Hereinafter, preferred embodiments of the motor according to the present invention will be described with reference to the accompanying drawings.

(First Embodiment)

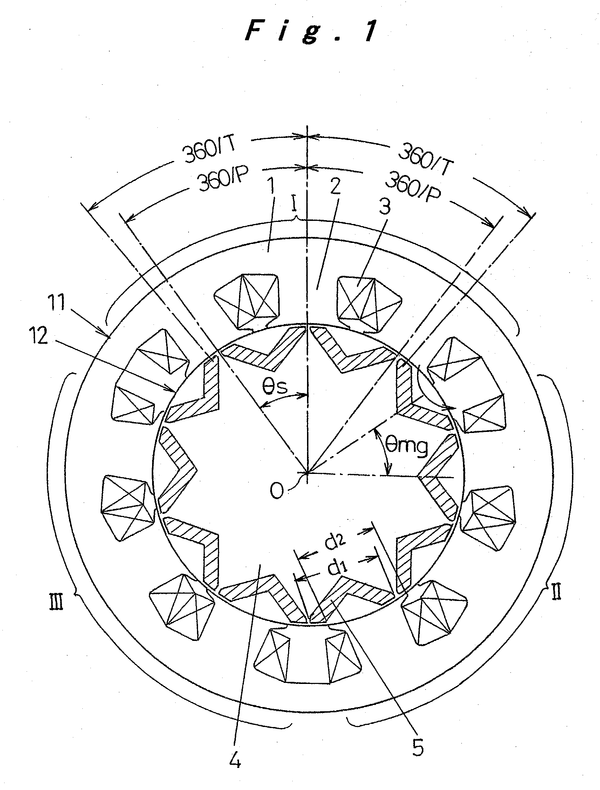

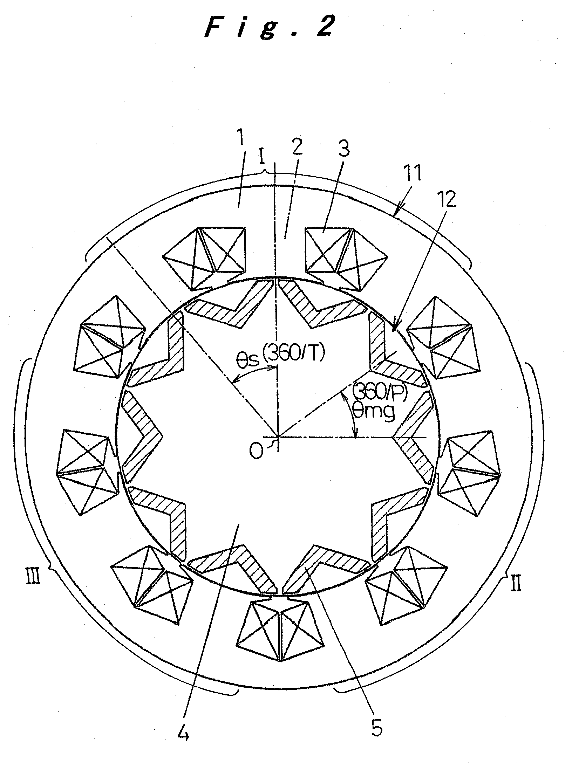

A first embodiment of the motor according to the present invention is described with reference to Fig. 1 and Fig. 2. In order to aid comprehension of the configuration of the motor of this embodiment, Fig. 1 and Fig. 2 illustrate cross-sectional views of the main elements of the motor viewed along a plane perpendicular to the central rotational axis. In Fig. 1 and Fig. 2, a stator core 1 formed from laminated electromagnetic steel plate, is equipped with a plurality of stator teeth 2 around which are wound windings 3. The windings 3 make up a three phase winding configuration, with each phase formed from three individual windings 3 in the example shown in the drawings. The three windings 3 of the same phase are positioned adjacent to one another, and the middle winding 3 of the three is wound in an opposite direction to the two outside windings 3. The three thus wound windings 3 are connected either in series or in parallel, and the winding groups of the three phases are arranged with a phase difference of 120 (deg) in terms of the electrical angle. Three stator teeth groups I, II, and III are formed, with each group comprising those stator teeth 2 around which windings 3 of the same phase have been wound. In other words, three stator teeth groups I, II, and III corresponding with the three phase windings are arranged with a 120 (deg) electrical angle therebetween. In the case of three phase windings, the number of stator teeth groups is a multiple of three, and a 120 (deg) electrical angle is provided between groups.

On the other hand, a plurality of permanent magnets 5 are embedded at equal intervals around the periphery of a rotor core 4 formed from laminated electromagnetic steel plate, thereby forming a rotor 12. This rotor 12 is arranged about the center of rotation O in a freely rotatable manner, leaving a slight gap between the peripheral surface thereof and the inner peripheral surfaces of the stator teeth 2.

As shown in Fig. 1, when the total number of permanent magnets 5 is termed P and the total number of stator teeth 2 is termed T, then the interpolar angle $\theta s$ (deg) between adjacent stator teeth 2 within each of the stator teeth groups I, II, and III is set to any angle within a range from an angle 360/P (deg) equal to the positional angle $\theta mg$ of the permanent magnets 5, through to an angle 360/T (deg) at which the stator teeth 2 are distributed equally around the entire periphery of the stator core 1. In the example shown in Fig. 1, the interpolar angle $\theta s$ (deg) between adjacent stator teeth 2 is shown set to the angle 360/P (deg) equal to the positional angle $\theta mg$ (deg) between adjacent permanent magnets 5, whereas in the example shown in Fig. 2, the interpolar angle $\theta s$ (deg) between adjacent stator teeth 2 is shown set to the angle 360/T (deg), with the stator teeth 2 distributed equally around the entire periphery of the stator core 1.

The examples shown in Fig. 1 and Fig. 2 represent 9-slot 10-pole motors. In other words, the number of winding sets within the stator 11, wherein one set represents a three phase winding system comprising U, V, and W phases, is 1, and the number of slots per winding phase is 3 (3 pairs), giving a total of 9 slots, whereas the number of permanent magnets 5 in the rotor is 10, thus providing 10 poles. However, the present invention is not restricted to this type of 3 pairs, 1 winding set, 9-slot, 10-pole motor.

A motor of the present invention may comprise n pairs, s winding sets, T slots, and P poles. In such cases, n and s must both be positive integers, the number of slots T is (n x s), the number of rotor poles P is an even number greater than the number of slots T, which in the case of three phase windings must satisfy the following equation:

$$P = 2 \times (s \,(\pm\, 1 + 3k))$$

(wherein, k is a positive integer).

In addition, setting P to the smallest number greater than T, namely (P > T), is preferred as such configurations provide improved volumetric efficiency.

The number of poles is determined using these relational equations. Specific examples include the configurations shown in Table 1.

Table 1

| Number of Pairs (n) | Number of Winding Sets (s) | Number of Groups (3s) | Number of Slots (T) | Number of Poles (P) |
|---|---|---|---|---|
| 2 | 1 | 3 | 6 | 8 |
| 2 | 2 | 6 | 12 | 16 |
| 2 | 3 | 9 | 18 | 24 |
| 2 | 4 | 12 | 24 | 32 |
| 3 | 1 | 3 | 9 | 10 |
| 3 | 2 | 6 | 18 | 20 |
| 3 | 3 | 9 | 27 | 30 |
| 3 | 4 | 12 | 36 | 40 |
| 4 | 1 | 3 | 12 | 14 |
| 4 | 1 | 3 | 12 | 16 |
| 4 | 2 | 6 | 24 | 28 |
| 4 | 2 | 6 | 24 | 32 |
| 5 | 1 | 3 | 15 | 16 |
| 5 | 1 | 3 | 15 | 20 |
| 5 | 1 | 3 | 15 | 22 |
| 5 | 2 | 6 | 30 | 32 |
| 5 | 2 | 6 | 30 | 40 |
| 6 | 1 | 3 | 18 | 20 |
| 6 | 1 | 3 | 18 | 22 |
| 6 | 1 | 3 | 18 | 26 |
| 6 | 2 | 6 | 36 | 40 |
| 7 | 1 | 3 | 21 | 22 |
| 7 | 1 | 3 | 21 | 26 |
| 7 | 1 | 3 | 21 | 28 |

The above equations represent conditions that enable smooth rotation of the motor when U, V, and W phase currents are passed sequentially through the windings 3 of each of the stator teeth groups. In other words, determining the number of pole pairs is P/2, then the induced voltage waveform Be generated from the magnets when the rotor rotates is represented by the following equation:

$$Be = \sin(P/2 \times \theta).$$

In a three phase motor, the U, V and W phases differ from each other by an electrical angle of 120 (deg). Accordingly, when current is passed through each winding with the electrical angle shifted by 120 (deg), the rotor rotates by the same angle in the same direction. In other words, the following equation must be established:

$$\sin(P/2 \times (\theta + 120/s)) = \sin(P/2 \times \theta \pm 120 + 360k).$$

This equation represents the situation wherein when the induced voltage waveform (the rotor) is in a position (the equation uses mechanical angles) in which the electrical angle has shifted 120 (deg) from a certain time where Be = 0, then provided it is equal to a position shifted 120 (deg) about the stator axis (U, V, and W shift), the rotor position (the induced voltage waveform Be) always adopts the same electrical value even when the current is sequentially altered by 120 (deg) from U to V, and from V to W, meaning the rotor undergoes a smooth single revolution.

The rotor 12 in this embodiment comprises a rotor core 4 and a plurality of substantially V shaped permanent magnets 5 embedded in the rotor core 4 at equal intervals around the circumferential direction, and the rotor 12 is provided in a freely rotatable manner about the central rotational axis O, with the stator opposing surface of the rotor 12 facing the rotor opposing surface of the stator 11 across a minute gap. As a result of these embedded permanent magnets 5, a section through which the magnetic flux passes comparatively easily, and a section through which the magnetic flux cannot pass easily, that is, a section with low magnetic resistance and a section with a higher magnetic resistance, are formed within the stator opposing portion of the rotor 12. The presence of these two sections causes a difference to develop between the inductance in the axial direction q and the inductance in the axial direction d, thus causing the development of a reluctance torque, and enabling an increase in the level of torque generated by the motor.

Furthermore because P > T, the positional angle between the permanent magnets 5 is smaller than the average interpolar angle between the stator teeth 2, and consequently as shown in Fig. 1, the effective width d1 in the circumferential direction of a permanent magnet 5 is set to be equal to or smaller than the circumferential width d2 of the tip of a stator teeth 2, that is, d1 ≤ d2, and in practice, this type of setting is employed. As a result, the entire width of the permanent magnet 5 overlaps with the tip of the stator teeth 2, meaning the induced voltage waveform adopts a sinusoidal form, thus preventing waveform distortions in the induced voltage, and improving the controllability of the voltage.

According to a motor with the configuration described above, a high level of torque is generated due to the fact that the motor employs a concentrated winding, permanent magnet type motor, and because the windings 3 on the stator teeth 2 within each of the stator teeth groups I, II and III are wound so that adjacent stator teeth 2 have different polarities, irregularities within the magnetic field distribution is lessened, distortions in the waveform of the counter electromotive voltage induced in the windings 3 during driving of the motor is reduced, and iron loss in the stator core 1 and the rotor core 4 is suppressed. Furthermore, the generation of overcurrent within the permanent magnets 5 in the rotor core 4 is also suppressed, meaning heat generation caused by such overcurrent is reduced and demagnetization of the permanent magnets is suppressed, thus enabling a more efficient motor.

In addition, in a motor with the configuration described above, the interpolar angle θs between stator teeth 2 within each stator teeth group is set to the same value as the positional angle θmg (= 360/P (deg)) between the permanent magnets 5, then the phases of the stator teeth 2 and the permanent magnets 5 coincide, enabling a high level of controllability, whereas when the interpolar angle θs between the stator teeth 2 is set to the angle (= 360/T (deg)) at which the stator teeth 2 are distributed equally around the entire circumference of the stator core 1, then cogging torque is minimized. Accordingly, by setting the interpolar angle θs (deg) between stator teeth 2 to any angle between 360/P (deg) and 360/T (deg), in accordance with the required levels of controllability and cogging torque characteristics, a motor with the desired characteristics is produced.


(Second Embodiment)


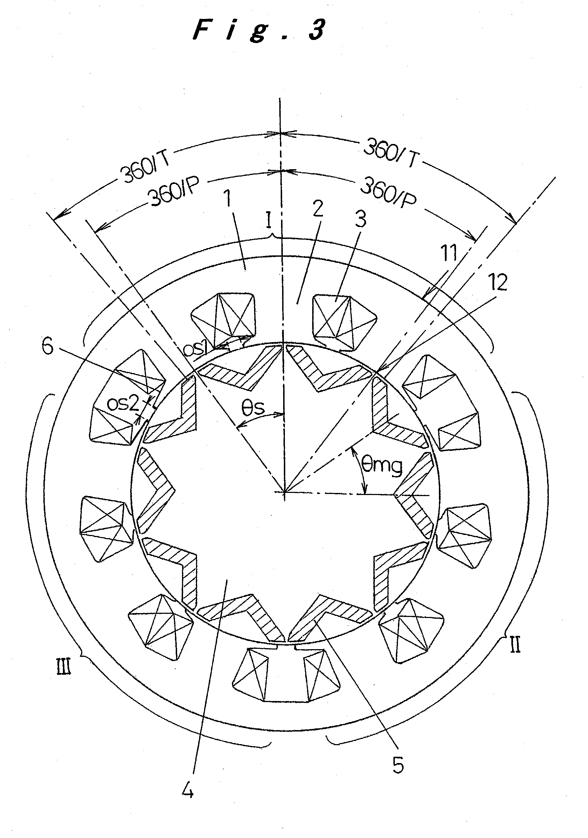

Next is a description of a motor according to a second embodiment of the present invention, with reference to Fig. 3. In the following descriptions of other embodiments, any structural element that is the same as that of a preceding embodiment is labeled with the same reference numeral and/or symbol, and the description of that element is omitted, meaning the following descriptions focus mainly on the points of difference from the preceding embodiments.

In the embodiment shown in Fig. 3, in those cases where the interpolar angle between stator teeth 2 within each of the stator teeth groups I, II, and III is not 360/T (deg), namely when the interpolar angle θs satisfies the relationship: 360/P (deg) ≤ θs (deg) < 360/T (deg), the open slot angle os1 (deg) between stator teeth 2 within each of the stator teeth groups I, II, and III is set so as to satisfy the following relationship relative to the interpolar angle θs between stator teeth 2,

$$\theta s/5 \ (deg) > os1 \geq \theta s/7 \ (deg)$$

and by adjusting the length of the feet 6 of adjacent stator teeth 2 from adjacent stator teeth groups I, II, and III, the open slot angle os2 (deg) between stator teeth 2 of adjacent stator teeth groups I, II, and III is set so as to satisfy the following relationship:

$$os2 \ (deg) \leq os1 \ (deg).$$

By employing this type of configuration, the interpolar angle θs between stator teeth 2 within the stator teeth groups I, II, and III and the positional angle θmg (deg) of the permanent magnets 5 are equal, and the open slot angle os2 (deg) between adjacent stator teeth 2 from adjacent stator teeth groups I, II, and III is either equal to, or smaller than, the open slot angle os1 (deg) between stator teeth 2 within each of the stator teeth groups I, II, and III. Consequently permeance variation in the magnetic path of the magnetic flux from the permanent magnets 5 is moderated, and variations in the magnetic field energy is also moderated, enabling a high level of controllability to be maintained, while the cogging torque is reduced. In other words, if the feet 6 of the adjacent stator teeth 2 from adjacent stator teeth groups I, II, and III are not stretched towards one another, then because the interpolar angle θs (deg) between stator teeth 2 within the stator teeth groups I, II, and III is equal to the positional angle θmg (deg) of the permanent magnets 5, a gap develops between stator teeth 2 of adjacent stator teeth groups I, II, and III, and the open slot angle os2 (deg) increases considerably, meaning when the rotor 12 is rotating and a permanent magnet 5 passes through the open slot angle os2 (deg), a large permeance variation occurs in the magnetic path and the cogging torque increases. In contrast, with the configuration of this embodiment described above, the cogging torque is reduced.

In addition, the interpolar angle θs (deg) between stator teeth 2 within the stator teeth groups I, II, and III may be set to any angle between the positional angle θmg (deg) of the permanent magnets 5 and the angle 360/T (deg), and the feet 6 at the tips of the stator teeth 2 then may be adjusted so that the positional spacing between the tips of adjacent stator teeth 2 equals 360/T (deg) (wherein T represents the total number of stator teeth) around the entire circumference of the stator 1. In this case, some of the feet 6 at the tips may lengthen and others may shorten. This configuration enables cogging torque to be reduced even further.

(Third Embodiment)

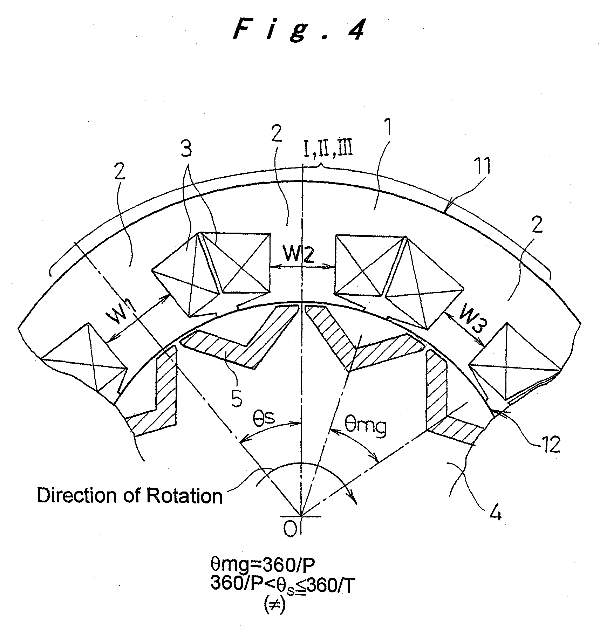

Next is a description of a motor according to a third embodiment of the present invention, with reference to Fig. 4.

In the embodiment shown in Fig. 4, in those cases where the interpolar angle θs (deg) between stator teeth 2 within each of the stator teeth groups I, II, and III is not equal to the positional angle (360/P (deg)) of the permanent magnets 5, that is, those cases where 360/P (deg) < θs (deg) ≤ 360/T (deg), in order to remove any differences in magnetic flux density caused by phase differences between stator teeth 2 within each of the stator teeth groups I, II, and III, the cross-sectional area of the wound section of the winding 3 of each stator teeth 2 in the group is adjusted so that relative to the cross-sectional area w1 of the stator teeth 2 positioned at the rear in terms of the rotational direction of the rotor 12, the cross-sectional area w2 of the stator teeth 2 one position ahead is smaller, and the cross-sectional area w3 of the stator teeth 2 positioned even further ahead is smaller still.

By employing this type of configuration, a uniform magnetic flux density is achieved in each of the stator teeth 2 within each of the stator teeth groups I, II, and III, and the induced voltage generated within the windings 3 on each of the stator teeth 2 is stabilized at a constant level, thereby improving the controllability of the motor. Furthermore, in those stator teeth 2 where the cross-sectional area has been reduced, the diameter of the wire used in the winding 3 is increased, enabling an equivalent reduction in copper loss and an improvement in efficiency.

(Fourth Embodiment)

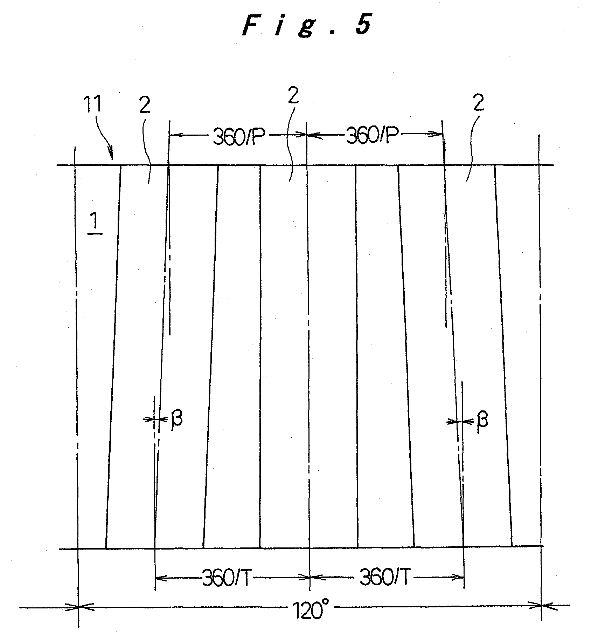

Next is a description of a motor according to a fourth embodiment of the present invention, with reference to Fig. 5.

In the embodiment shown in Fig. 5, in those cases where the interpolar angle θs (deg) between stator teeth 2 within each of the stator teeth groups I, II and III is not equal to the positional angle (360/P (deg)) of the permanent magnets 5, a skew is applied to the stator teeth 2 that is sufficient to move the interpolar angle to any value down to 360/P (deg). In the example shown in the drawing, the interpolar angle at one end of the stator teeth 2 is 360/T (deg), and a skew of angle β is applied so that the interpolar angle at the other end becomes 360/P. Needless to say, the skew angle may be set to any angle within a range from 0 to β.

By applying an arbitrary angle skew to bring the interpolar angle of the stator teeth 2 closer to 360/P (deg), the effect of phase difference between the stator teeth 2 and the permanent magnets 5 is reduced, enabling a reduction in cogging torque and greatly improved controllability at high speeds.

(Fifth Embodiment)

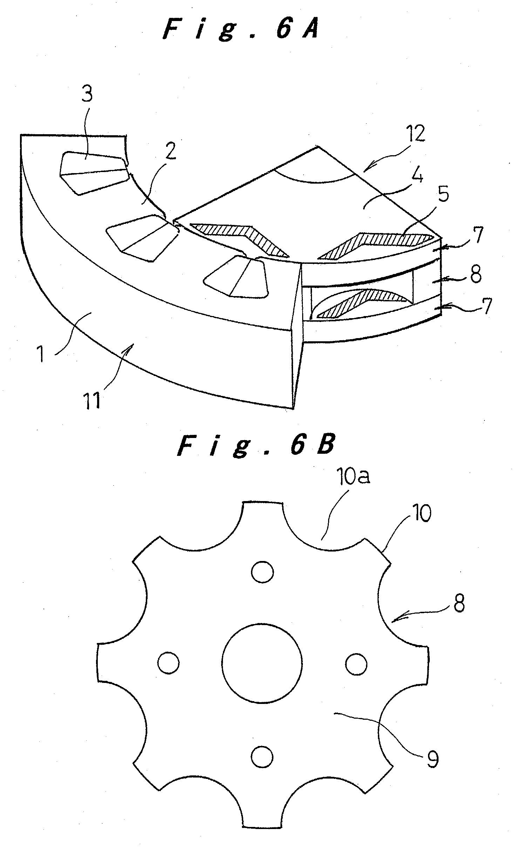

Next is a description of a motor according to a fifth embodiment of the present invention, with reference to Fig. 6A and Fig. 6B.

The above embodiments described configurations in which the rotor 12 is constructed solely from a magnet type rotor with permanent magnets embedded in a rotor core 4, whereas in this fifth embodiment, the rotor 12 is constructed in a manner shown in Fig. 6A, by layering, in an axial direction, magnet type rotor sections 7 in which permanent magnets 5 are embedded within a rotor core 4, and a reluctance type rotor section 8 such as that shown in Fig. 6B, in which concave sections 10a are formed at equal intervals around the outer periphery of a rotor core 9, thus forming stator teeth 10 in equal number to the permanent magnets 5.

According to this configuration, reluctance torque is better utilized, which provides the following beneficial effects. Namely, in those cases where the interpolar angle between stator teeth 2 on the stator 11 is set to a value different from 360/P (deg), thus prioritizing the cogging torque characteristics over the motor controllability, the controllability tends to deteriorate, particularly at high-speed rotation, but reluctance torque is used to improve the controllability, enabling a combination of favorable cogging torque characteristics and good high-speed controllability to be achieved.

In the embodiments described above, although not shown in any of the drawings, by employing a configuration in which a minor groove is provided in the surface at the tip of each of the stator teeth opposing the rotor, the polarity at the stator teeth tips will be fragmented to present an apparent S-pole, N-pole, S-pole type arrangement, meaning that when a high level of torque is generated, the torque ripple will be simultaneously suppressed, enabling a further reduction in the cogging torque. These minor grooves are not restricted to rectangular shapes, and circular arc shaped grooves may also be employed. Furthermore, the present invention is not restricted to the formation of a single minor groove in each stator teeth, and a plurality of minor grooves may also be formed in each stator teeth.

Furthermore, in the embodiments described above, by employing a configuration in which a section is removed near the circumferential edge of the surface at the tip of each of the stator teeth opposing the rotor, so that the tip surface moves away from the stator opposing surface of the rotor core, variations in the magnetic field energy at the stator teeth will be lessened even further, enabling a further reduction in the cogging torque.

In addition, in the embodiments described above, by employing a rotor construction in which slits with substantially the same shape as the permanent magnets but with a width that is less than the thickness of the permanent magnets are provided in the rotor core in positions further away from the stator than the permanent magnets, reluctance torque will be better utilized.

Furthermore, in the descriptions of the above embodiments, inner-rotor type motors were described where the rotor 12 is disposed inside the stator 11 in a freely rotatable manner, but a motor of the present invention may also be applied to outer-rotor type motors where a toroidal rotor is disposed around the outer periphery of a stator in a freely rotatable manner. Needless to say, similar effects will be achieved with such outer-rotor type motors.

By using each of the motors of the above embodiments of the present invention as the drive motor in an electric vehicle such as a PEV (pure electric vehicle), an HEV (hybrid electric vehicle) or an FCEV (fuel cell electric vehicle), the size of the drive motor is reduced, and a high degree of efficiency and silence is achieved with favorable controllability. Accordingly, an electric vehicle equipped with such a motor has a more spacious interior, travels further on a single charge, and provides lower levels of vibration and noise during operation. Furthermore, similar effects will be achieved when the motor of the present invention is installed as the drive motor in an electrical appliance or a robot or the like.

As described above, according to a motor of the present invention, by constructing the motor as a concentrated winding, permanent magnet type motor, a high level of torque is generated, and because the windings within each stator teeth group are wound so that the polarity of adjacent stator teeth differs, irregularities within the magnetic field distribution is lessened, and distortions in the waveform of the counter electromotive voltage induced in the windings during driving of the motor is reduced. In addition, by enabling the interpolar angle between stator teeth within each stator teeth group to be set to any desired angle within a range between the positional angle of the permanent magnets, wherein the phases of the stator teeth and the permanent magnets match, enabling a high level of controllability, through to the angle at which the stator teeth are distributed equally around the entire circumference of the stator core, enabling cogging torque to be minimized, a motor that displays the required controllability and cogging torque characteristics is produced.

Furthermore, when the interpolar angle between stator teeth within each of the stator teeth groups does not match the angle generated when the stator teeth are distributed evenly around the entire circumference of the stator core, by stretching the tips of adjacent stator teeth from adjacent stator teeth groups across the open slot between the teeth, permeance variation in the magnetic path of the magnetic flux from the permanent magnets is moderated, and the cogging torque is reduced, enabling the suppression of iron loss within the stator core and the rotor core. In addition, because the generation of overcurrent within the permanent magnets in the rotor core is also suppressed, heat generation is reduced and demagnetization of the permanent magnets is suppressed, meaning a more efficient motor with reduced cogging torque is produced.

**Claims**

1. A motor comprising:

   a stator (11), in which windings (3) are wound around each of a plurality of stator teeth (2) provided on a stator core (1); and

   a rotor (12), in which a plurality of permanent magnets (5) that exceeds the number of stator teeth (2) are disposed at equal intervals around a periphery of a rotor core (4), wherein

   the stator teeth (2) are arranged into a plurality of stator teeth groups (I, II, III), in which the windings (3) to which the same phase voltage is applied are positioned adjacent to one another, and the windings (3) on adjacent stator teeth (2) in the group (I, II, III) are wound in opposite directions, and

   an interpolar angle θs (deg) between the stator teeth (2) within each stator teeth group (I, II, III) is set to any angle that satisfies the requirement: 360/P (deg) ≤ θs (deg) ≤ 360/T (deg) where T is the total number of stator teeth (2) and P is the total number of permanent magnets (5).

2. The motor according to claim 1, wherein

   the total number of the stator teeth T satisfies that T = 3 × s × n, and the total number of the rotor poles P satisfies that P = 2 × (s (± 1 + 3k)), and P > T where n is the number of stator teeth (2) within a single stator teeth group (I, II, III), s is the number of winding sets, wherein one set is defined as the windings (3) of the three U, V, and W phases across three stator teeth groups (I, II, III), and k is a positive integer.

3. The motor according to claim 1, wherein

   a width dimension in a circumferential direction of a tip of the stator teeth (2) is set to a value substantially equal to, or larger than an effective width in the circumferential direction of the permanent magnet (5).

4. The motor according to claim 1, wherein

   when the interpolar angle between the stator teeth (2) is not 360/T (deg), tips of the adjacent stator teeth (2) from the adjacent stator teeth groups (I, II, III) across a gap between the teeth are stretched to reduce a width of an open slot between the stator teeth (2).

5. The motor according to claim 4, wherein

   the two requirements:

   θs/5 (deg) > os1 (deg) ≥ θs/7 (deg), and
   os2 (deg) ≤ os1 (deg)

   are satisfied where

   θs (deg) is the interpolar angle between the adjacent stator teeth (2) within the same stator teeth group (I, II, III), os1 (deg) is an open slot angle between the adjacent stator teeth (2) within the same stator teeth group (I, II, III), and os2 (deg) is an open slot angle between the adjacent stator teeth (2) from different stator teeth groups (I, II, III).

6. The motor according to claim 1, wherein

   when the interpolar angle between the stator teeth (2) is not 360/P (deg), cross-sectional areas of the windings (3) around the adjacent stator teeth (2) are altered so that any differences in magnetic flux density caused by phase differences between the adjacent stator teeth (2) of the same phase are removed and a uniform magnetic flux density is achieved between the stator teeth (2).

7. The motor according to claim 1, wherein

   the rotor (12) is constructed by layering, in an axial direction, a magnet type rotor section (7) in which permanent magnets (5) are disposed in the rotor core (4), and a reluctance type rotor section (8) in which the rotor core (9) is provided with magnetic saliency.

8. The motor according to claim 1, wherein

   when the interpolar angle between the stator teeth (2) is not 360/P (deg), the adjacent stator teeth (2) of the same phase is skewed to produce any angle down to 360/P (deg).

# *F i g . 1*

# F i g . 2

# Fig. 3

# *Fig. 4*

Direction of Rotation

$\theta mg = 360/P$

$360/P < \theta_s \leq 360/T$

$(\neq)$

# $Fig.5$

*Fig. 6A*

*Fig. 6B*

## Fig. 7
## Prior Art